# EUROPÄISCHE PATENTSCHRIFT

(11) **EP 1 836 909 B1**
(45) Veröffentlichungstag und Bekanntmachung des Hinweises auf die Patenterteilung: **25.05.2011**
(21) Anmeldenummer: 07090051.9
(22) Anmeldetag: 21.03.2007
(51) Int. Cl.: A24C 5/60, B23K 26/067

(54) **Perforationsvorrichtung der tabakverarbeitenden Industrie zum Perforieren einer Umhüllung eines stabförmigen Artikels**
Perforation device of the tobacco industry for perforating the wrapping of a rod-shaped article
Dispositif de perforation de l'industrie du traitement du tabac destiné à perforer une enveloppe d'un article en forme de tige

(30) Priorität: 21.03.2006 DE 102006013929
(43) Veröffentlichungstag der Anmeldung: 26.09.2007
(73) Patentinhaber: Hauni Maschinenbau AG, 21033 Hamburg (DE)
(72) Erfinder: Graßmel, Ralf, 21635 Jork (DE); Lange, Norbert, 21509 Glinde (DE)
(74) Vertreter: Wenzel & Kalkoff

(56) Entgegenhaltungen:
- EP-A1- 0 384 121
- EP-A1- 0 578 385
- EP-A1- 0 761 376
- EP-B1- 1 465 747
- WO-A1-2005/115181
- DE-A1- 2 751 522
- DE-A1- 3 321 800
- DE-A1- 3 418 188
- DE-A1- 10 120 923
- DE-A1- 10 160 167
- DE-A1- 19 511 393
- DE-A1- 19 530 216
- DE-C2- 2 918 283
- FR-A1- 2 410 446
- US-A- 4 404 452
- US-A- 5 092 350
- US-A- 5 325 381
- US-A1- 2004 045 564
- US-B1- 6 526 985
- US-E- R E31 478

## Beschreibung

Die Erfindung betrifft eine Perforationsvorrichtung der Tabak verarbeitenden Industrie zum Perforieren einer Umhüllung eines stabförmigen Artikels, mit mindestens einer optischen Strahlungsquelle zum Erzeugen mindestens eines Primärstrahls und optischen Elementen zum Teilen des Primärstrahls in mindestens vier Teilstrahlen.

Perforationsvorrichtungen zum Erzeugen einer Perforationszone im Belagpapier einer Filterzigarette sind aus den Dokumenten DE 33 21 800 A1, DE 34 18 188 A1, DE 37 05 627 A, EP 0 578 385 A1, DE 195 30 216 A1 und DE 101 60 167 A1 bekannt. Außerdem ist aus dem Dokument WO2005/115181 eine Perforationsvorrichtung mit den Merkmalen des Oberbegriffs des Anspruchs 1 bekannt. In der Regel werden diese Vorrichtungen zur Perforation von Belagpapier in der Herstellung doppelt langer Zigarettenstäbe verwendet. Daher ist im Stand der Technik eine Aufteilung des Primärstrahls in zwei Teilstrahlen zur Erzeugung identischer Perforationen für jede einer Zigarette entsprechende Hälfte eines doppelt langen Zigarettenstabs bekannt.

Die Aufgabe der vorliegenden Erfindung besteht darin, eine Perforationsvorrichtung bereitzustellen, die eine differenziertere Beeinflussung der Luftdurchlässigkeit durch die Perforation in der Umhüllung des stabförmigen Artikels erlaubt.

Die Erfindung löst diese Aufgabe mit den Merkmalen der Ansprüche 1 und 8. Aufgrund der Erzeugung von mindestens vier unabhängigen Teilstrahlen, anstelle der herkömmlichen Erzeugung von zwei unabhängigen Teilstrahlen, können für jede Zigarette mindestens zwei unabhängige Perforationszonen im Belagpapier erzeugt werden. Dies ermöglicht die individuelle Einstellung der Luftdurchlässigkeit der Umhüllung an mehreren axial versetzten Positionen. Besondere Bedeutung hat die Erfindung im Zusammenhang mit der Entwicklung mehrstufig aufgebauter Zigarettenfilter, um eine individuelle Einstellung der Luftdurchlässigkeit des Belagpapiers für jede Filterkomponente zu ermöglichen. Erfindungsgemäß werden mindestens vier wechselseitig nicht überlappende Teilstrahlen erzeugt. Dies bedeutet, dass die Lichtbündel von mindestens vier Teilstrahlen im Bereich zwischen den optischen Elementen und dem stabförmigen Artikel wechselseitig geometrisch nicht überlappen. Dies ermöglicht eine individuelle, unabhängige Einstellung der von jedem Teilstrahl erzeugten Perforationseigenschaften, insbesondere die Erzeugung unterschiedlicher Perforationszonen für eine Zigarette.

Durch die Zuordnung spiegelbildlich zueinander angeordneter Teilstrahlen, in Bezug auf eine Spiegelebene des stabförmigen Artikels, zu demselben Primärstrahl wird eine identische Perforationsstruktur der beiden Zigaretten eines doppelt langen Zigarettenstabs sichergestellt. Durch dieses Merkmal ist die Erfindung von der DE 33 21 800 A1 abgegrenzt, deren asymmetrische Zuordnung der Teilstrahlen zu den Primärstrahlen, in Bezug auf die Spiegelebene des stabförmigen Artikels, dem Ziel identischer Perforationen für jede Zigarette zuwiderläuft.

Zwar ist beispielsweise aus den Dokumenten DE 34 18 188 A1, DE 195 30 216 A1 und DE 101 60 167 A1 die Erzeugung von vier Teilstrahlen bekannt. Dabei überlappen jedoch jeweils zwei Teilstrahlen zur Erzeugung einer einheitlichen Perforationszone für eine Zigarette. Jede Perforationszone umfasst daher zwei separate, jedoch in engem räumlichen Zusammenhang stehende Perforationsreihen. Diese Dokumente offenbaren daher lediglich zwei wechselseitig nicht überlappende Teilstrahlen bzw. Teilstrahlenbereiche.

Im Rahmen der vorliegenden Anmeldung wird der Begriff "Perforationszone" für sämtliche Perforationen verwendet, die mit wechselseitig überlappenden Teilstrahlen erzeugt werden. Erfindungsgemäß werden daher mindestens vier Perforationszonen (mindestens zwei Perforationszonen pro Zigarette) erzeugt, während die zuvor genannten Dokumente die Erzeugung lediglich zweier Perforationszonen (einer Perforationszone pro Zigarette) offenbaren.

Die Erfindung wird im Folgenden anhand vorteilhafter Ausführungsbeispiele unter Bezugnahme auf die beigefügten Zeichnungen beschrieben. Dabei zeigen:
- Fig. 1:: eine Perforationsvorrichtung in einer Ansicht senkrecht zu der Längsachse des stabförmigen Artikels;
- Fig. 2:: die Perforationsvorrichtung gemäß Fig. 1 in einer Ansicht entlang der Längsachse des stabförmigen Artikels;
- Fig. 3:: eine Perforationsvorrichtung in einer ersten erfindungsgemäßen Ausführungsform in einer Ansicht senkrecht zu der Längsachse des stabförmigen Artikels;
- Fig. 4:: die Perforationsvorrichtung der Ausführungsform gemäß Fig. 3 in einer Ansicht entlang der Längsachse des stabförmigen Artikels;
- Fig. 5:: eine Perforationsvorrichtung in einer zweiten Ausführungsform in einer Ansicht senkrecht zu der Längsachse des stabförmigen Artikels; und

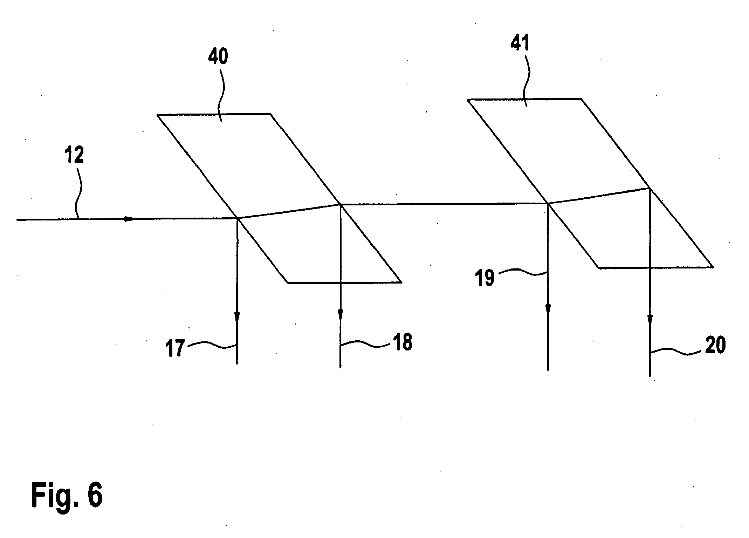

- Fig. 6:: eine Perforationsvorrichtung in einer dritten Ausführungsform in einer Ansicht senkrecht zu der Längsachse des stabförmigen Artikels.

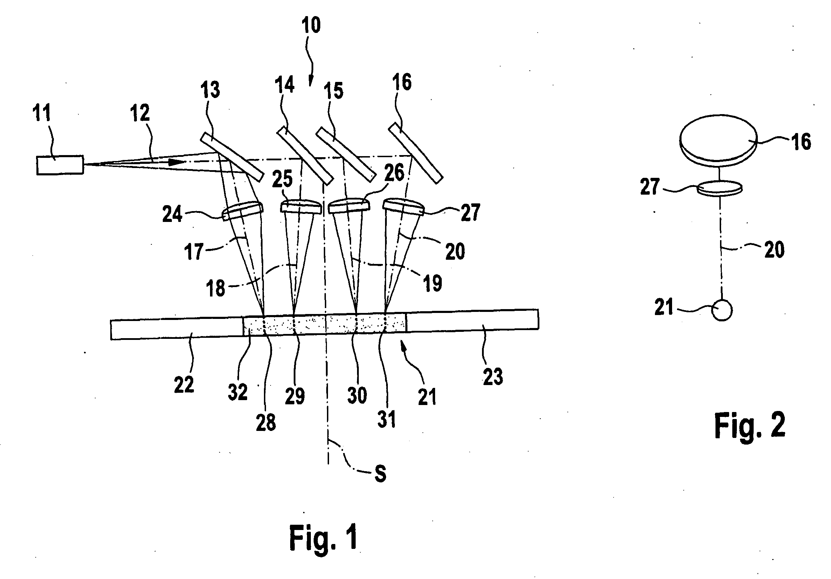

Es wird darauf hingewiesen, dass die Figuren 1 und 2 und die zugehörige Beschreibung nicht unter den Schutzbereich der Ansprüche fallen, sondern lediglich zum besseren Verständnis der Technologie dienen.

In der Ausführungsform gemäß Fig. 1 und 2 umfasst die Perforationsvorrichtung 10 ein Strahlerzeugungsmittel 11, vorzugsweise einen Laser, zur Erzeugung des optischen Primärstrahls 12 und optische Elemente 13 bis 16 zur Teilung des Primärstrahls 12 in Teilstrahlen (Sekundärstrahlen) 17 bis 20 und zur Umlenkung der Teilstrahlen 17 bis 20 in Richtung auf den stabförmigen Artikel 21, sowie entsprechende Fokussierelemente 24 bis 27 zur Fokussierung der Teilstrahlen 17 bis 20 auf den stangenförmigen Artikel 21 zur Erzeugung entsprechender Perforierungen 28 bis 31 in dem Belagpapier 32 des stangenförmigen Artikels 21. Der stabförmige Artikel 21 hat die Form einer doppelt langen Zigarette, d.h. er weist zwei jeweils eine Zigarette bildende Hälften 22, 23 auf.

Der stabförmige Artikel 21 wird im nachfolgenden Produktionsablauf in der Spiegelebene 10 in zwei einzelne Zigaretten 22, 23 geschnitten.

Zur Erzeugung der Perforation wird die Laserstrahlung beispielsweise mittels einer nicht gezeigten Taktscheibe gepulst und der stangenförmige Artikel 21 um seine Längsachse ortsfest rotiert. Dies geschieht vorzugsweise mittels einer entsprechenden Rollvorrichtung in einem Filteransetzer, wie beispielsweise aus der DE 37 05 627 A1 bekannt ist. Die den Filteransetzer und die Rollvorrichtung betreffende Offenbarung aus der DE 37 05 627 A1, insbesondere Fig. 1 und deren Beschreibung, wird hiermit in die vorliegende Anmeldung aufgenommen. Die vorliegende Anmeldung umfasst insbesondere einen Filteransetzer gemäß Fig. 1 aus der DE 37 05 627 A1, bei der die dortige Vorrichtung 36 eine Perforationsvornchtung 10 gemäß der vorliegenden Anmeldung umfasst.

Die optischen Elemente 13 bis 15 aus Fig. 1 sind Strahlteiler in Form halbdurchlässiger Spiegel, die jeweils einen Teil des Primärstrahls 12 reflektieren, woraus die Teilstrahlen 17 bis 19 resultieren, und den übrigen Teil des Primärstrahls 12 zum nachfolgenden optischen Element durchlassen. Das letzte optische Element 16 weist in der Regel eine Reflektivität von 100 % auf (undurchlässiger Spiegel bzw. reines Umlenkelement).

Die Teilstrahlen 17 bis 20 sind ausgedehnte Strahlenbündel, wie dies am Beispiel des Teilstrahls 17 in Fig. 1 verdeutlicht ist. Für die übrigen Teilstrahlen 18 bis 20 wurde lediglich der Strahlenkegel hinter den jeweiligen Fokussierlinsen 25 bis 27 angedeutet. Wie aus Fig. 1 ersichtlich, sind die vier Strahlenbündel hinter den optischen Elementen 13 bis 16 wechselseitig überlappungsfrei.

Wenn die optischen Elemente 13 bis 15 nacheinander Reflektivitäten von 25 %, 33 % und 50 % aufweisen, weist jeder der Teilstrahlen 17 bis 20 dieselbe Intensität auf, so dass identische Perforationen 28 bis 31 erzeugt werden. Dies muss aber nicht zwingend der Fall sein. Im allgemeinen müssen die Reflektivitäten der optischen Elemente 13 bis 15 lediglich so aufeinander abgestimmt sein, dass jeweils spiegelbildliche Teilstrahlen, bezogen auf die Spiegelebene S zwischen den Zigaretten 22 und 23, die gleiche Intensität aufweisen, damit sichergestellt ist, dass beide Zigaretten 22 und 23 die gleiche Perforationsstruktur aufweisen. Beispielsweise die Teilstrahlen 17 und 18 können unterschiedliche Intensitäten aufweisen, um die Luftdurchlässigkeit der Perforationen 28 und 29 der Zigarette 22 individuell einstellen zu können, wobei die Summe der Intensitäten der Teilstrahlen 17 und 18 in diesem Fall zweckmäßigerweise 50 % beträgt.

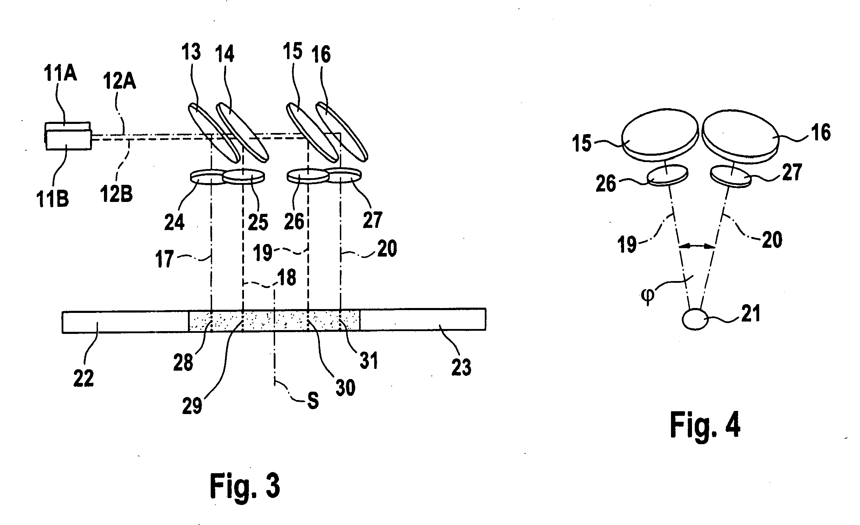

In der Ausführungsform gemäß Fig. 3 und 4 umfasst die Perforationsvorrichtung 10 zwei Strahlerzeugungsmittel 11A, 11B, insbesondere zwei Laser, zur Erzeugung zweier optischer Primärstrahlen 12A und 12B. Die optischen Elemente 13 und 16 befinden sich im Strahlengang des Primärstrahls 11A, die optischen Elemente 14 und 15 befinden sich im Strahlengang des Primärstrahls 11B. Anders ausgedrückt sind die spiegelbildlichen äußeren Teilstrahlen 17 und 20 demselben Primärstrahl 12A und die spiegelbildlichen inneren Teilstrahlen 18 und 19 demselben Primärstrahl 12B zugeordnet. Die Verwendung zweier einzeln einstellbarer Strahlerzeugungsmittel 11A, 11B zur Erzeugung separater Primärstrahlen 12A, 12B gestattet es, die Perforationseigenschaften, beispielsweise die Lochzahl oder die Ventilation, der äußeren Perforationen 28, 31 unabhängig von den Perforationseigenschaften der inneren Perforationen 29, 30 individuell einstellen zu können.

Wie aus Fig. 4 ersichtlich ist die dem ersten Primärstrahl 12A entsprechende optische Anordnung 11 A, 13, 16, 24, 27 zweckmäßigerweise gegenüber der dem zweiten Primärstrahl 12B entsprechenden optischen Anordnung 11 B, 14, 15, 25, 26 um einen Azimuth-Winkel ϕ versetzt angeordnet. Dabei ist ein kleiner Azimuth-Winkel ϕ im Hinblick auf eine kompakte Baugröße bevorzugt.

Die Strahlteiler 13 und 14 weisen in dieser Ausführungsform zweckmäßigerweise eine Reflektivität von 50 % auf.

In einer anderen Ausführungsform kann eine Mehrzahl von Primärstrahlen auch mittels eines einzigen Strahlerzeugungsmittels erzeugt werden, beispielsweise mittels eines oder mehrerer vorgeschalteter Strahlteiler.

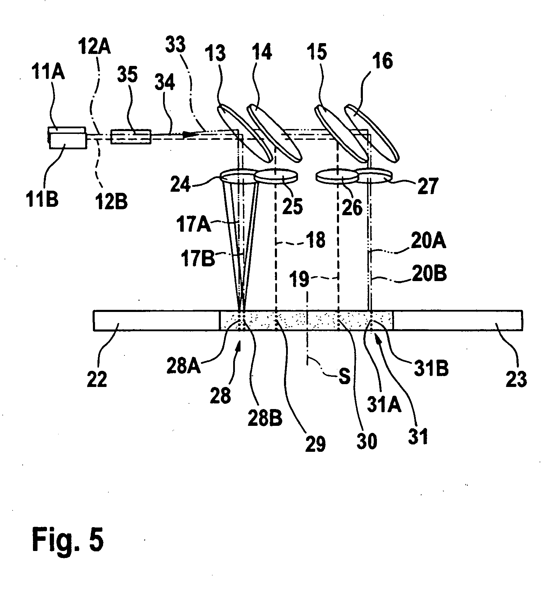

) Bei der in Fig. 5 gezeigte Ausführungsform - die Ansicht entlang der Längsachse des stabförmigen Artikels ist ähnlich der in Fig. 4 gezeigten - werden in jeder der beiden äußeren Perforationszonen 28, 31 jeder Zigarette 22, 23 jeweils zwei Perforationsreihen 28A, 28B bzw. 31A, 31B erzeugt, insgesamt also sechs Perforationsreihen. Zu diesem Zweck wird der Primärstrahl 12A in zwei Primärstrahlen 33, 34 aufgeteilt. Dies kann beispielsweise mittels eines diffraktiven Elements 35 geschehen, oder einem anderen geeigneten Mittel, beispielsweise einer Anordnung gemäß DE 195 30 216 A1. Die Primärstrahlen 33, 34 werden von dem Strahlteiler 13 teilweise reflektiert, um die Teilstrahlen 17A, 17B zu erzeugen, die wiederum die Perforationsreihen 28A, 28B erzeugen. Die vom Strahlteiler 13 transmittierten Primärstrahlen 33, 34 werden von dem Strahlteiler 16 reflektiert, um die Teilstrahlen 20A, 20B zu erzeugen, die wiederum die Perforationsreihen 31A, 31B erzeugen.

Die den Teilstrahlen 17A, 17B entsprechenden Strahlenbündel bzw. -kegel überlappen räumlich, wie aus Fig. 5 am Beispiel der den Teilstrahlen 17A, 17B entsprechenden Strahlenkegel nach dem Fokussierelement 24 ersichtlich ist. Ebenso überlappen die den Teilstrahlen 20A, 20B entsprechenden Strahlenbündel bzw. -kegel. Das Ausführungsbeispiel der Fig. 5 umfasst daher vier Perforationszonen entsprechend vier wechselseitig nicht überlappenden Teilstrahlenbereichen 17 bis 20 mit insgesamt sechs Teilstrahlen 17A, 17B, 18, 19, 20A, 20B.

In einer weiteren Ausführungsform kann alternativ oder zusätzlich in jeder der inneren Perforationszonen 29, 30 eine Mehrzahl von Perforationsreihen erzeugt werden.

Die Erfindung ist nicht auf die Erzeugung von zwei Perforationsreihen pro Perforationszone beschränkt.

Die Ausführungsform gemäß Fig. 7 verdeutlicht, dass die optischen Strahlteilungsmittel nicht auf halbdurchlässige Spiegel beschränkt sind und dass pro unabhängigem Teilstrahl nicht ein separates optisches Strahlteilungsmittel vorgesehen sein muss. Als Strahlteilungsmittel sind hier optische Prismen 40, 41 aus einem geeigneten Material, beispielsweise ZnS vorgesehen. Die wechselseitig unabhängigen Teilstrahlen 17 bis 20 werden hier durch Reflexion an den Vorder- und Rückseiten der Prismen 40, 41 erzeugt.

Der Abstand der inneren Perforationszonen 29, 30 von der Spiegelebene S liegt vorzugsweise im Bereich von 11 bis 15 mm und beträgt weiter vorzugsweise etwa 13 mm, der Abstand der äußeren Perforationszonen 28, 31 von der Spiegelebene S liegt vorzugsweise im Bereich von 19 bis 25 mm.

Die Teilstrahlen 17 bis 20 fallen vorzugsweise unter einem Winkel von maximal 10° auf die Umhüllung des stabförmigen Artikels 21 ein.

## Patentansprüche

1. Perforationsvorrichtung der Tabak verarbeitenden Industrie zum Perforieren einer Umhüllung eines stabförmigen Artikels (21), mit mindestens einer optischen Strahlungsquelle zum Erzeugen mindestens eines Primärstrahls und optischen Elementen zum Teilen des Primärstrahls in mindestens vier Teilstrahlen, **dadurch gekennzeichnet, dass** Mittel (11A, 11B) zum Erzeugen mindestens zweier unabhängiger Primärstrahlen (12A, 12B) vorgesehen sind und dass die den Primärstrahlen (12A; 12B) zugeordneten optischen Elemente (13, 16; 14, 15) azimuthal winkelversetzt um den stabförmigen Artikel (21) zum Erzeugen von mindestens vier wechselseitig nicht überlappenden Teilstrahlen (17-20) zum Herstellen von mindestens vier in Axialrichtung des stabförmiger Artikels (21) versetzten Perforationszonen (28-31) angeordnet sind, wobei in Bezug auf eine Spiegelebene (S) des stabförmigen Artikels (21) spiegelbildlich zueinander angeordnete Teilstrahlen demselben Primärstrahl zugeordnet sind.

2. Perforationsvorrichtung nach Anspruch 1, **dadurch gekennzeichnet, dass** Mittel (35) zum Erzeugen von überlappenden Teilstrahlen (17A, 17B, 18A, 18B) zum Erzeugen einer Mehrzahl von Perforationsreihen (28A, 28B; 31A, 31B) in einer Perforationszone (28; 31) vorgesehen sind.

3. Perforationsvorrichtung nach Anspruch 1, **dadurch gekennzeichnet, dass** der Winkelversatz weniger als 60°, vorzugsweise weniger als 45°, vorzugsweise weniger als 30° beträgt.

4. Perforationsvorrichtung nach einem der Ansprüche 1 bis 3, **dadurch gekennzeichnet, dass** jeder Primärstrahl (12A; 12B) mittels einer separaten Strahlungsquelle (11A; 11B) erzeugt wird.

5. Perforationsvorrichtung nach einem der Ansprüche 1 bis 4, **dadurch gekennzeichnet, dass** die optischen Elemente teildurchlässige Spiegel (13-15) umfassen.

6. Perforationsvorrichtung nach einem der Ansprüche 1 bis 5, **dadurch gekennzeichnet, dass** die Durchlässigkeit der optischen Elemente (13-15) so abgestimmt ist, dass in Bezug auf eine Spiegelebene (S) des stabförmigen Artikels (21) jeweils zwei spiegelbildlich zueinander angeordnete Teilstrahlen dieselbe Strahlungsintensität aufweisen.

7. Filteransetzmaschine mit einer Vorrichtung zum Rotieren eines stabförmigen Artikels (21) um seine Längsachse in einer ortsfesten Perforationsposition und einer Perforationsvorrichtung (10) nach einem der Ansprüche 1 bis 6 zum Perforieren eines in der Perforationsposition rotierenden stabförmigen Artikels (21).

8. Verfahren zum Perforieren einer Umhüllung eines stabförmigen Tabakartikels, **gekennzeichnet durch** die Schritte: Erzeugen von mindestens zwei optischen, unabhängigen Primärstrahlen (12A; 12B), Teilen der Primärstrahlen (12A, 12B) in mindestens vier wechselseitig nicht überlappende Teilstrahlen (17-20) mittels optischen Elementen (13, 16; 14, 15), die azimuthal winkelversetzt um den stabförmigen Artikel (21) angeordnet sind, wobei in Bezug auf eine Spiegelebene (S) des stabförmigen Artikels (21) spiegelbildlich zueinander angeordnete Teilstrahlen demselben Primärstrahl zugeordnet sind, und Perforieren des stabförmigen Artikels (21) in mindestens vier in Axialrichtung versetzten Perforationszonen mittels der Teilstrahlen.

## Claims

1. Perforation apparatus of the tobacco-processing industry for perforating a wrapper of a rod-shaped article (21), having at least one optical radiation source for generating at least one primary beam, and optical elements for splitting the primary beam into at least four partial beams, **characterised in that** means (11A, 11B) are provided for generating at least two independent primary beams (12A, 12B), and that the optical elements (13, 16; 14, 15) allocated to the primary beams (12A; 12B) are offset by an azimuth angle about the rod-shaped article (21) for generating at least four mutually non-overlapping partial beams (17-20) for producing at least four perforation zones (28-31) offset in the axial direction of the rod-shaped article (21), wherein partial beams arranged mirror symmetrically to each other, with respect to a mirror plane (S) of the rod-shaped article (21), are allocated to the same primary beam.

2. Perforation apparatus according to claim 1, **characterised in that** means (35) are provided for generating overlapping partial beams (17A, 17B, 18A, 18B) for producing a plurality of rows of perforations (28A, 28B; 31A, 31B) in a perforation zone (28; 31).

3. Perforation apparatus according to claim 1, **characterised in that** the angular offset is less than 60°, preferably less than 45°, preferably less than 30°.

4. Perforation apparatus according to any one of claims 1 to 3, **characterised in that** each primary beam (12A; 12B) is generated by means of a separate radiation source (11A; 11B).

5. Perforation apparatus according to any one of claims 1 to 4, **characterised in that** the optical elements include partially transmitting mirrors (13-15).

6. Perforation apparatus according to any one of claims 1 to 5, **characterised in that** the transmittance of the optical elements (13-15) is co-ordinated with each other in such a way that, with respect to a mirror plane (S) of the rod-shaped article (21), two partial beams arranged mirror symmetrically to each other each have the same radiation intensity.

7. Filter assembling machine having an apparatus for rotating a rod-shaped article (21) about its longitudinal axis in a stationary perforation position, and a perforation apparatus (10) according to any one of claims 1 to 6 for perforating a rod-shaped article (21) rotating in the perforation position.

8. Method for perforating a wrapper of a rod-shaped tobacco article, **characterized by** the steps: generating two optical, independent primary beams (12A; 12B), splitting the primary beams (12A; 12B) into at least four mutually non-overlapping partial beams (17-20) by means of optical elements (13, 16; 14, 15), which are offset by an azimuth angle about the rod-shaped article (21), wherein partial beams arranged mirror symmetrically to each other, with respect to a mirror plane (S) of the rod-shaped article (21), are allocated to the same primary beam, and perforating the rod-shaped article (21) in at least four perforation zones offset in the axial direction by means of the partial beams.

## Revendications

1. Dispositif de perforation de l'industrie du transformation du tabac, destiné à perforer une enveloppe d'un article en forme de tige (21), comprenant au moins une source de rayonnement optique servant à produire au moins un faisceau primaire et des éléments optiques servant à diviser le faisceau primaire en au moins quatre faisceaux partiels, **caractérisé en ce qu'**il est prévu des moyens (11A, 11B) servant à produire au moins deux faisceaux primaires indépendants (12A, 12B) et **en ce que** les éléments optiques (13, 16 ; 14, 15) associés aux faisceaux primaires (12A, 12B) sont disposés autour de l'article en forme de tige (21) avec décalage angulaire azimutal pour produire au moins quatre faisceaux partiels (17-20) qui ne se recouvrent pas mutuellement et qui servent à former au moins quatre zones de perforation (28-31) décalées dans la direction axiale de l'article en forme de tige (21), des faisceaux partiels disposés l'un en face de l'autre par rapport à un plan de symétrie (S) de l'article en forme de tige étant associés au même faisceau primaire.

2. Dispositif de perforation selon la revendication 1, **caractérisé en ce qu'**il est prévu des moyens (35) pour produire des faisceaux partiels (17A, 17B, 18A, 18B) se chevauchant mutuellement qui servent à produire une pluralité de rangées de perforations (28A, 28B ; 31A, 31B) dans une zone de perforation (28 ; 31).

3. Dispositif de perforation selon la revendication 1, **caractérisé en ce que** le décalage angulaire est inférieur à 60°, de préférence inférieur à 45°, de préférence inférieur à 30°.

4. Dispositif selon l'une des revendications 1 à 3, **caractérisé en ce que** chaque faisceau primaire (12A ; 12B) est produit au moyen d'une source de rayonnement séparée (11A ; 11B).

5. Dispositif de perforation selon l'une des revendications 1 à 4, **caractérisé en ce que** les éléments optiques comprennent des miroirs semi-transparents (13-15).

6. Dispositif de perforation selon l'une des revendications 1 à 5, **caractérisé en ce que** le degré de transmission des éléments optiques (13-15) est adapté de telle manière que deux faisceaux partiels disposés l'un en face de l'autre par rapport à un plan de symétrie (S) de l'article en forme de tige (21) présentent la même intensité de rayonnement.

7. Machine de pose de filtres comportant un dispositif servant à faire tourner un article en forme de tige (21) autour de son axe longitudinal dans une position de perforation fixe et un dispositif de perforation (10) selon l'une des revendications 1 à 6 destiné à perforer un article en forme de tige (21) qui tourne dans la position de perforation.

8. Procédé pour perforer une enveloppe d'un article de tabac en forme de tige, **caractérisé par** les étapes suivantes : production d'au moins deux faisceaux optiques primaires indépendants (12A, 12B), division des faisceaux primaires (12A, 12B) en au moins quatre faisceaux partiels (17-20) qui ne se recouvrent pas mutuellement, au moyen d'éléments optiques (13, 16 ; 14, 15) disposés autour de l'article en forme de tige (21) avec décalage angulaire azimutal, des faisceaux partiels disposés l'un en face de l'autre par rapport à un plan de symétrie (S) de l'article en forme de tige (21) étant associés au même faisceau primaire, et perforation de l'article en forme de tige (21) dans au moins quatre zones de perforation décalées dans la direction axiale au moyen des faisceaux partiels.
